# FASCICULE DE BREVET EUROPEEN

(11) **EP 0 895 710 B1**
(45) Date de publication et mention de la délivrance du brevet: **06.11.2002**
(21) Numéro de dépôt: 98420132.7
(22) Date de dépôt: 24.07.1998
(51) Int. Cl.: A01D 34/82

(54) **Tondeuse multifonctions**
Mehrzweckmäher
Multifunctional mower

(30) Priorité: 04.08.1997 FR 9710173
(43) Date de publication de la demande: 10.02.1999
(73) Titulaire: Etablissements Daloz, 39000 Lons le Saunier (FR)
(72) Inventeur: Daloz, Jacques, 39000 Lons Le Saunier (FR); Jacquet, Laurent, 39570 Poids De Fiole (FR)
(74) Mandataire: Perrier, Jean-Pierre

(56) Documents cités:
- EP-A- 0 756 814
- BE-A- 688 778
- FR-A- 2 509 568
- US-A- 2 017 524
- US-A- 3 375 645
- US-A- 3 496 707
- US-A- 4 277 937
- US-A- 4 466 235

## Description

L'invention est relative aux appareils utilisés pour tondre, faucher, débroussailler et comportant une lame rotative calée sur l'arbre vertical d'un moteur thermique, ce moteur étant porté par un carter muni de roues et enveloppant la lame.

Dans les tondeuses, le carter est fermé sur l'avant et sur les côtés et est muni d'une ouverture arrière d'éjection, en général associée à un volet qui, lorsqu'il est ouvert, permet à l'herbe coupée de venir dans un panier amovible de collecte.

Lorsque les herbes et végétaux sont très hauts, et possèdent des tiges plus résistantes, la coupe s'effectue mal et provoque des bourrages perturbant la tonte et la collecte.

Le brevet belge 688 778 décrit une tondeuse faucheuse dont le carter protecteur de la lame est, dans sa partie frontale, en retrait par rapport à la lame, et comporte une ouverture pour le passage de cette lame. Pour la fonction tondeuse, la lame dépassant du carter est protégée par un capot amovible, tandis que pour la fonction faucheuse débroussailleuse ce capot est enlevé pour permettre à la lame rotative de couper les tiges des végétaux ayant leur contact avec le carter. Cette configuration étant dangereuse, il faut ajouter à l'avant du carter un bouclier relevable de sécurité.

La présente invention a pour objet de fournir une tondeuse multifonctions pouvant être utilisée pour la coupe des gazons et pour la coupe des herbes hautes, en supprimant dans la fonction tondeuse-débrousailleuse les bourrages et tous dangers pour le jardinier.

A cet effet, dans la tondeuse selon l'invention, l'ouverture frontale du carter, d'une part, s'étend entre un bord amont, disposé en avant du plan médian transversal de la tondeuse, et un bord aval, disposé en arrière de ce même plan, et, d'autre part, présente une hauteur allant en croissant du bord amont jusqu'au bord aval, tandis que les éléments amovibles comprennent, pour la fonction tondeuse, un capot semi-circulaire, obturant toute l'ouverture, et pour la fonction faucheuse, un déflecteur disposé sur le bord supérieur de la partie aval de l'ouverture.

Pour transformer la tondeuse en faucheuse, il suffit donc de retirer le capot et de le remplacer par le déflecteur. Dans cette configuration, l'ouverture est dégagée sur la plus grande partie de sa longueur, ce qui permet, lors de l'avancement de l'appareil sur un front d'herbes hautes, de courber les tiges de ces herbes vers l'avant en amenant leurs parties inférieures sous le carter et dans la trajectoire de la lame rotative pour en favoriser le sectionnement. Les herbes, ainsi coupées, sont entraînées par la lame jusqu'au déflecteur qui les couche latéralement sur le côté en formant un andain.

Avantageusement, les roues avant sont montées libres en rotation à l'extrémité avant de bras qui, en forme de col de cygne dans le plan vertical, forment, dans le plan horizontal, un "V" dont les ailes sont espacées et divergent vers l'avant.

Cette organisation des roues permet le passage entre elles d'une masse importante d'herbes hautes et favorise donc le fauchage de celles-ci.

D'autres caractéristiques et avantages ressortiront de la description qui suit en référence au dessin schématique annexé représentant, à titre d'exemple, une forme d'exécution de cette tondeuse.
Figure 1 est une vue en perspective de la tondeuse avec les deux éléments amovibles,
Figure 2 est une vue en plan par dessus de la tondeuse équipée du capot, dans sa fonction tondeuse,
Figures 3 et 4 sont des vues, respectivement, en plan par dessus, et de côté en élévation, de la tondeuse lorsqu'elle est équipée du déflecteur, pour assurer la fonction faucheuse.
Figure 5 est une vue partielle de l'avant montrant la forme générale de l'ouverture ménagée dans le carter,
Figure 6 est une vue schématique montrant le développement de l'ouverture du carter.

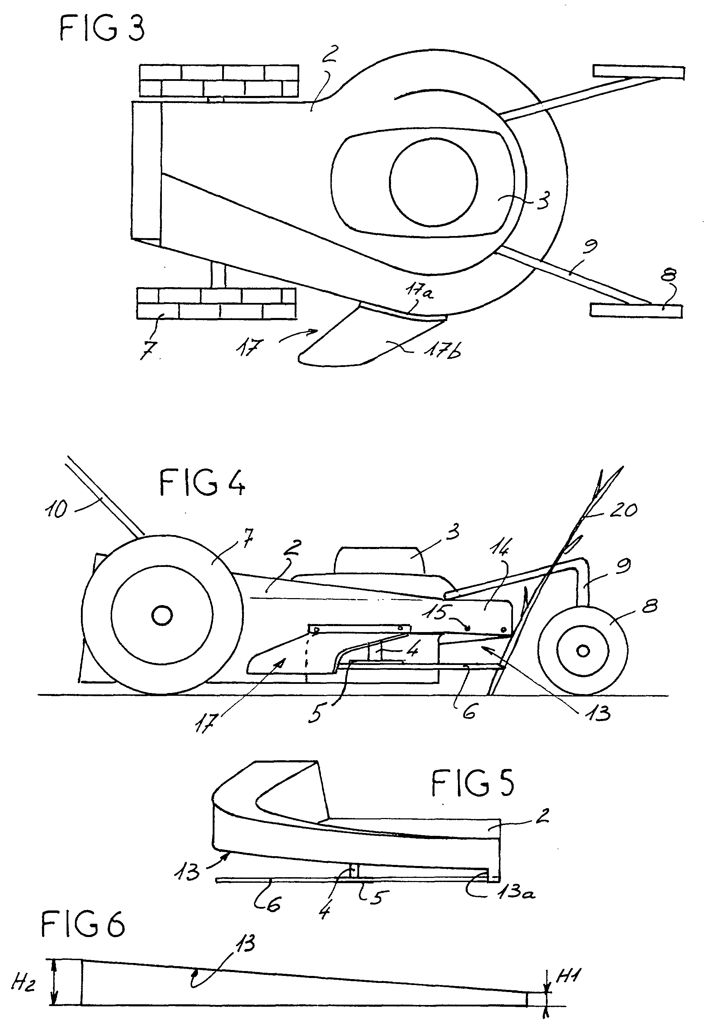

Dans ce dessin, la référence numérique 2 désigne le carter d'une tondeuse constituant également châssis. Ce dernier porte un moteur thermique 3, fixé sur sa partie supérieure et dont l'arbre vertical 4 (figure 4) est muni, à son extrémité, de moyens de fixation 5 d'une lame diamétrale 6 assurant la coupe des végétaux et disposée en totalité à l'intérieur du carter. Le carter 2 supporte également deux roues arrière 7, motorisées ou non, et deux roues avant 8, par l'intermédiaire de bras 9. Dans sa partie arrière, il sert à la fixation d'un brancard 10 et est muni de moyens de fixation, non représentés, pour un panier amovible de collecte 12. Le carter est muni d'une ouverture arrière pouvant communiquer avec le panier de collecte et équipée d'un volet, non représenté.

Selon l'invention, le carter 2 comporte une ouverture frontale 13 dont le bord supérieur 14 est muni de moyens de fixation 15, tels qu'écrous, ou tiges filetées, espacés radialement servant à la fixation de deux éléments amovibles 16 et 17 permettant de modifier la fonction de l'appareil, c'est à dire de lui donner une fonction de tondeuse ou une fonction de faucheuse. L'élément 16 est constitué par un capot semi circulaire qui recouvre la totalité de l'ouverture 13, tandis que l'élément 17 est constitué par un déflecteur se fixant sur le bord supérieur de la partie arrière de l'ouverture 13 qui est en aval par rapport au sens de rotation 21 de la lame 6.

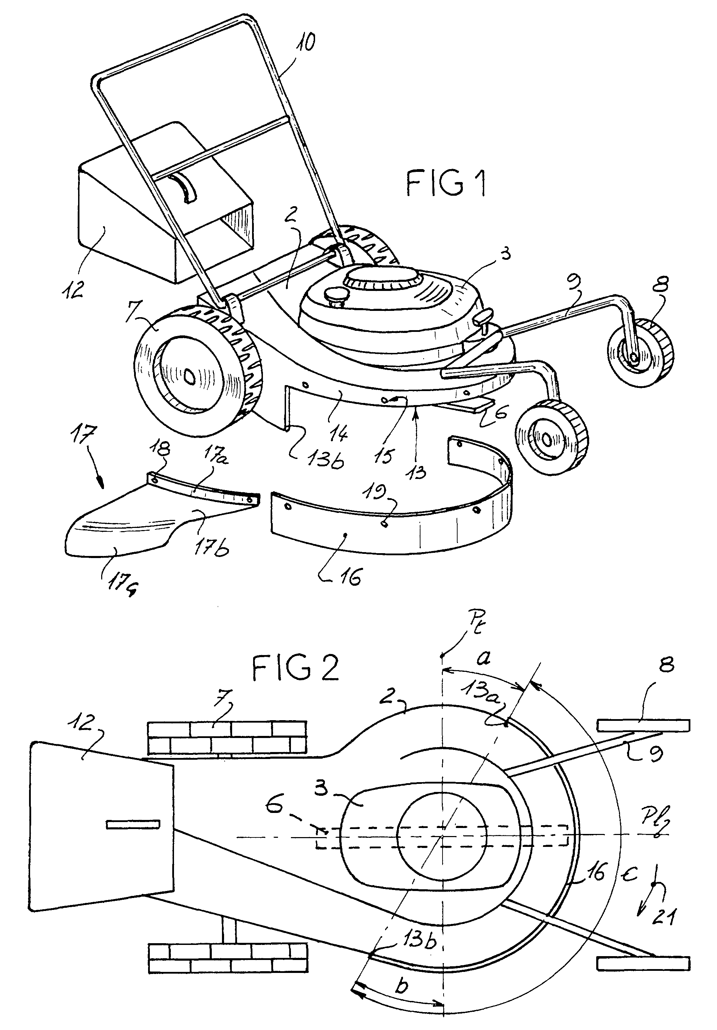

Comme le montre plus en détails la figure 2, l'ouverture 13 s'étend sur un angle c ayant une valeur d'au moins 120°, et qui dans cette forme d'exécution est de 180°. Cette ouverture est dissymétrique par rapport au plan médian longitudinal Pl de la machine. Plus précisément, le bord 13a, qui est en amont par rapport au sens de rotation de la lame, représentée par la flèche 21, est en avant par rapport au plan médian transversal Pt de l'appareil, d'une valeur angulaire a, tandis que le bord aval 13b est en arrière par rapport à ce plan médian Pt d'une valeur angulaire b. Les valeurs angulaires a et b sont de l'ordre de 20 à 30°.

Les figures 4 à 6 montrent que la hauteur de l'ouverture 13 va en croissant depuis le bord amont 13a jusqu'au bord aval 13b d'une valeur H1 à une valeur H2, montré figure 6, H2 étant compris entre 2 et 5 fois H1.

Le déflecteur 17 est composé d'une patte de fixation 17a et d'une paroi 17b saillant radialement vers l'extérieur en allant en s'inclinant vers le bas avec une pente de l'ordre de 15°. Cette paroi est munie, à son extrémité libre, d'un retour 17c, coudé vers le bas. La patte 17a est munie de perforations 18 servant soit au passage de vis se vissant dans des écrous fixés sur le carter 2 et constituant moyens de fixation 15, soit au passage des tiges filetées fixées sur le carter pour constituer ces moyens de fixation et dépassant de la patte pour recevoir un écrou.

De même, le capot 16 est traversé par des perforations 19 coopérant avec les moyens de fixation 15.

Comme montré à la figure 2, lorsque la tondeuse est en configuration de tondeuse, le capot 16 est fixé sur le bord 14 du carter 15, de manière à obturer totalement l'ouverture 13. Dans cette configuration, la tondeuse peut être utilisée avec son volet arrière abaissé ou avec son volet arrière relevé, cas dans lequel les déchets sont éjectés dans le panier 12.

Pour amener la tondeuse dans sa configuration de faucheuse, il faut retirer le capot 16 et mettre en place le déflecteur 17 sur la partie arrière ou aval, de l'ouverture 13, comme montré aux figures 3 et 4. Dans ces conditions, lorsque la tondeuse est déplacée, le bord 14 de son carter vient en contact avec la tige 20 des végétaux en les pliant sur l'avant, comme montré à la figure 4, ce qui permet aux parties inférieures des tiges de venir sous le carter 2 dans la trajectoire de la lame 6. La rotation de la lame amène les tiges coupées contre le déflecteur 17 qui, par son inclinaison et son retour coudé 17b, les couchent sur le sol en formant un andain.

Il faut ici noter que l'augmentation de la hauteur de l'ouverture 13 évite aux tiges 20 de se coincer sous le carter et empêche donc les bourrages nécessitant d'arrêter l'avancement et voire même le fonctionnement de la faucheuse. Le déflecteur 17 assure également la protection de l'opérateur en limitant les projections vers l'arrière, étant précisé que, en position de faucheuse, le volet 3 disposé à l'arrière du carter 2 est également maintenu en position abaissée pour s'opposer à toute projection vers l'opérateur.

Dans la forme d'exécution représentée, les roues arrière 7 de la tondeuse ont un diamètre plus grand que celui des tondeuses traditionnelles, et par exemple de l'ordre de 20 à 30 cm, et ceci pour faciliter le déplacement de l'appareil, en terrain difficile, lorsqu'il est en position de faucheuse. Les roues avant 8 sont montées libres en rotation à l'extrémité de bras 9 qui, dans le plan vertical, et comme montré aux figures 1 et 4, sont en forme de col de cygne et qui, dans le plan horizontal, et comme montré aux figures 2 et 3, forment un "V" dont les ailes sont espacées et divergent vers l'avant pour permettre le passage d'un volume important jusqu'au carter 2.

Il ressort de ce qui précède que par un aménagement simple, peu onéreux et de mise en place aisée, la tondeuse peut être rapidement transformée en faucheuse ou inversement, tout en restant sans danger pour l'utilisateur et permettre le débroussaillage sans risque de bourrage.

## Revendications

1. Tondeuse multifonctions comprenant un carter (2) sur roues (7, 8), une lame rotative (6), disposée sous le carter, et un moteur thermique (3), disposé sur le carter et dont l'arbre vertical porte la lame (6), ledit carter étant muni d'une ouverture frontale (13) et de moyens de fixation (15) pour des éléments amovibles (16, 17) correspondant à la fonction tondeuse, ou à la fonction faucheuse, **caractérisé en ce que** l'ouverture frontale (13) du carter, d'une part, s'étend entre un bord amont (13a), disposé en avant du plan médian transversal de la tondeuse, et un bord aval (13b), disposé en arrière de ce même plan, et, d'autre part, présente une hauteur allant en croissant du bord amont (13a) jusqu'au bord aval (13b), tandis que les éléments amovibles comprennent, pour la fonction tondeuse, un capot semi-circulaire (16), obturant toute l'ouverture (13), et pour la fonction faucheuse, un déflecteur (17) disposé sur le bord supérieur de la partie aval de l'ouverture (13).

2. Tondeuse selon la revendication 1, **caractérisée en ce que** le déflecteur (17) est composé d'une patte (17a) de fixation sur le bord supérieur de l'ouverture (13), d'une paroi (17b), saillant radialement vers l'extérieur en s'inclinant vers le bas, et d'un retour (17c) coudé vers le bas et ménagé à l'extrémité libre de cette paroi (17b).

3. Tondeuse selon la revendication 1, **caractérisée en ce que** les roues avant (8) sont montées libres en rotation à l'extrémité avant de bras (9) qui, en forme de col de cygne dans le plan vertical, forment, dans le plan horizontal, un "V" dont les ailes sont espacées et divergent vers l'avant.

## Patentansprüche

1. Multifunktionaler Rasenmäher, umfassend ein Gehäuse (2) auf Rädern (7, 8), ein unter dem Gehäuse vorgesehenes Drehschneidmesser (6), und einen auf dem Gehäuse vorgesehenen Verbrennungsmotor (3), dessen senkrechte Welle das Schneidmesser (6) trägt, wobei das Gehäuse mit einer stirnseitigen Öffnung (13) und Befestigungsmitteln (15) für abnehmbare Elemente (16, 17) entsprechend der Rasenmähfunktion oder der Grasschneidfunktion ausgestattet ist,
**dadurch gekennzeichnet, dass** sich die stirnseitige Öffnung (13) einerseits zwischen einer oberhalb angeordneten Kante (13a), die vor der quer verlaufenden Mittelebene des Rasenmähers vorgesehen ist, und einer unterhalb angeordneten Kante (13b), die hinter dieser Ebene vorgesehen ist, erstreckt, und dass sie andererseits eine Höhe aufweist, die ansteigend von der oberhalb angeordneten Kante (13a) bis zur unterhalb angeordneten Kante (13b) verläuft, während die abnehmbaren Elemente für die Rasenmähfunktion eine halbkreisförmige, die gesamte Öffnung (13) verschließende Abdeckung (16) und für die Grasschneidfunktion ein Ablenkelement (17) umfassen, welches auf der oberen Kante des unterhalb angeordneten Teils der Öffnung (13) angeordnet ist.

2. Rasenmäher nach Anspruch 1,
**dadurch gekennzeichnet, dass** das Ablenkelement (17) aus einer Krempe (17a) zum Befestigen auf der oberen Kante der Öffnung (13), einer Wandung (17b), die radial nach außen vorsteht und sich dabei nach unten neigt, und einem Rücksprung (17c) besteht, der nach unten gebogen ist und am freien Ende dieser Wandung (17b) angebracht ist.

3. Rasenmäher nach Anspruch 1,
**dadurch gekennzeichnet, dass** die Vorderräder (8) frei drehbar am vorderen Ende der Arme (9) befestigt sind, welche auf vertikaler Ebene in Form eines Schwanenhalses ausgebildet sind und auf horizontaler Ebene ein "V" bilden, dessen Schenkel mit Abstand voneinander angeordnet sind und nach vorne auseinandergehen.

## Claims

1. A multi-function mower comprising a housing (2) on wheels (7, 8), a rotary blade (6) arranged below the housing, and a thermal motor (3) which is arranged on the housing and the vertical shaft of which carries the blade (6), the said housing being provided with a front opening (13) and with fixing means (15) for detachable parts (16, 17) corresponding to the mowing function or the reaping function, **characterised in that** the front opening (13) of the housing on the one hand extends between an upstream edge (13a) arranged in front of the transverse central plane of the mower, and a downstream edge (13b) arranged behind the same plane, and on the other hand has a height which increases from the upstream edge (13a) to the downstream edge (13b), while the detachable parts comprise, for the mowing function, a semi-circular cover (16) closing the entire opening (13) and, for the reaping function, a deflector (17) arranged on the upper edge of the downstream portion of the opening (13).

2. A mower according to claim 1, **characterised in that** the deflector (17) comprises a flange (17a) for fixing to the upper edge of the opening (13), a wall (17b) projecting radially outwards and inclined downwards, and a return (17c) bent downwards and arranged at the free end of this wall (17b).

3. A mower according to claim 1, **characterised in that** the front wheels (8) are mounted so as to be freely rotatable on the front end of arms (9) which are swan-necked in the vertical plane and, in the horizontal plane, form a "V", the limbs of which are spaced apart and diverge towards the front.
